Europäisches Patentamt

European Patent Office

Office européen des brevets

(19)

(11) Veröffentlichungsnummer: **0 048 685**

**A2**

(12) **EUROPÄISCHE PATENTANMELDUNG**

(21) Anmeldenummer: **81730092.4**

(22) Anmeldetag: **17.09.81**

(51) Int. Cl.³: **B 60 C 27/06**

(30) Priorität: **18.09.80 CH 7021/80**
**18.09.80 CH 7022/80**

(43) Veröffentlichungstag der Anmeldung:
**31.03.82 Patentblatt 82/13**

(84) Benannte Vertragsstaaten:
**AT CH DE FR GB IT LI NL**

(71) Anmelder: **RUD-Kettenfabrik Rieger & Dietz GmbH u. Co.**

**D-7080 Aalen 1(DE)**

(72) Erfinder: **Rieger, Werner**
**Haus Häselbach**
**D-7084 Unterkochen(DE)**

(72) Erfinder: **Rieger, Hansjörg**
**Saarstrasse 48**
**D-7080 Aalen(DE)**

(72) Erfinder: **Holzwarth, Dietmar**
**Vogelhofstrasse 51**
**D-7070 Schwäbisch Gmünd(DE)**

(74) Vertreter: **Böning, Manfred, Dr. Ing. et al,**
**Patentanwälte Dipl.-Ing. Dieter Jander Dr. Ing. Manfred Böning Kurfürstendamm 66**
**D-1000 Berlin 15(DE)**

(54) Gleitschutzkette.

(57) Bei einer Gleitschutzkette für Fahrzeugreifen wird das Kettennetz von je einer gegen die Innenseite und die Außenseite des Reifens zur Anlage kommenden Halterung gebildet. Um bei der Aufbewahrung der Gleitschutzkette Platz zu sparen und das Wenden sowie die Handhabung der Kette zu erleichtern, ist die Formsteifigkeit der inneren Halterung (1) größer als die Formsteifigkeit der äußeren Halterung (2).

Fig. 1

EP 0 048 685 A2

## Gleitschutzkette

Die Erfindung betrifft eine Gleitschutzkette für Fahrzeugreifen mit je einer bei montierter Kette gegen die Innenseite und die Außenseite des Reifens zur Anlage kommenden Halterung für sich über die Lauffläche erstreckende Kettenstrangabschnitte.

Gleitschutzketten der vorgenannten Art sind aus der DE-GMS 76 23 342 und der DE-OS 25 56 115 bekannt. Bei den bekannten Ketten sind die Abmessungen der Halterungen und ihre Formsteifigkeit gleich groß, dies bringt bei der Aufbewahrung der Ketten im Fahrzeug insofern Probleme mit sich, als der von neben- oder aufeinandergelegten Halterungen gebildete Stapel vergleichsweise breit bzw. hoch wird. Die im wesentlichen gleiche Ausbildung der Halterungen erschwert darüberhinaus ein Wenden des an den Halterungen befestigten Kettennetzes, da hierbei jeweils eine Halterung durch die andere hindurchbewegt werden muß.

Der Erfindung liegt die Aufgabe zugrunde, Gleitschutzketten der in Betracht gezogenen Gattung dahingehend zu verbessern, daß die angedeuteten Nachteile vermieden werden. Diese Aufgabe wird erfindungsgemäß dadurch gelöst, daß die Formsteifigkeit der inneren Halterung größer ist als die Formsteifigkeit der äußeren Halterung.

Die erfindungsgemässe Gleitschutzkette bietet den Vorteil, daß bei der Aufbewahrung mehrerer Ketten im Kofferraum eines Fahrzeuges der von ihnen gebildete Stapel eine geringere Breite bzw. Höhe hat als dies bei den bekannten Ketten der Fall ist. Erreicht wird dieser Vorteil dadurch, daß die jeweils äußeren Halterungen in den lichten Innenraum des von den inneren Halterungen gebildeten Stapels zu liegen kommen. Aufgrund der geringeren Formsteifigkeit der äußeren Halterung läßt diese sich zudem leicht zum Wenden des Kettennetzes durch die innere Halterung bewegen. Schließlich ergreift der Benutzer der erfindungsgemässen Kette bei der Montage spontan die formsteifere, d.h. die innere Halterung, was das Vorordnen des Kettennetzes und den Montagevorgang erleichtert.

Die Erfindung wird im folgenden anhand der beigefügten Zeichnung näher erläutert. Es zeigen:

Figur 1 die perspektivische Ansicht einer Gleitschutzkette,

Figur 2 eine Einzelheit der Halterung einer Gleitschutzkette,

Figur 3 eine Einzelheit einer abgewandelten Halterung,

Figur 4 eine Einzelheit einer weiteren Halterung,

Figur 5 einen Schnitt durch miteinander verbundene Kettenglieder der Halterung gemäß Figur 4 und

Figur 6 einen Schnitt längs der Linie VI-VI in Figur 5.

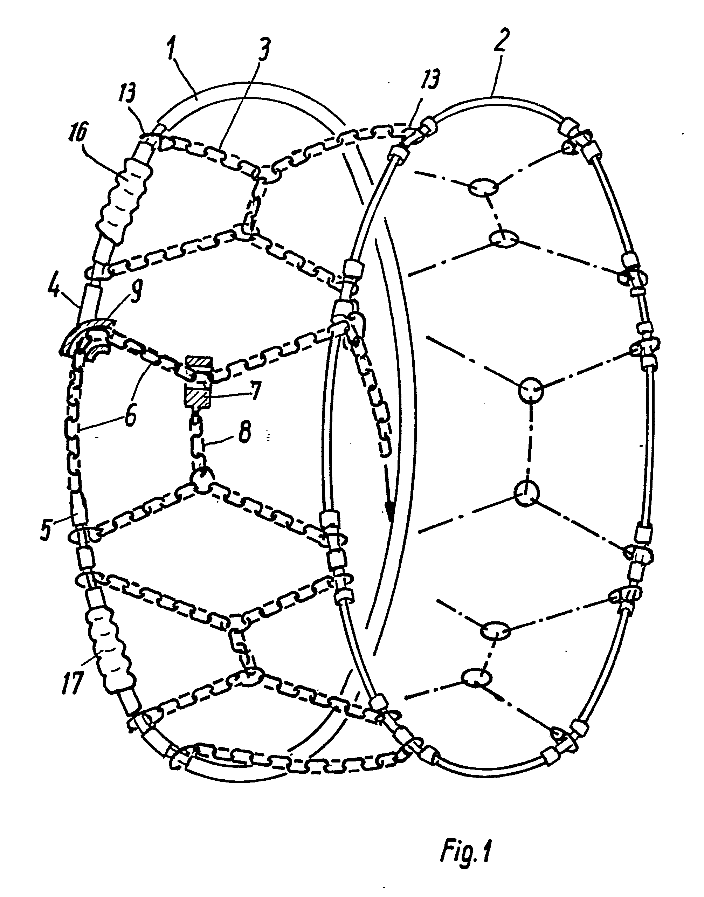

In Fig. 1 ist 1 die innere Halterung und 2 die äußere Halterung einer Gleitschutzkette. Beide Halterungen 1 und 2 sind formsteif. Die Formsteifigkeit der äußeren Halterung 2 ist jedoch geringer als die Formsteifigkeit der inneren Halterung. Die Halterungen 1 und 2 dienen zur Befestigung eines allgemein mit 3 bezeichneten Kettennetzes. Während die äußere Halterung 2 die Form eines geschlossenen Ringes hat, wird die innere Halterung von einem offenen Bügel gebildet, dessen Enden 4 und 5 durch eine Spannkette 6 miteinander verbunden sind, die im Bereich der Lauffläche des Reifens eine Gleithülse 7 passiert, welche an einem Ende eines Spurstückes 8 befestigt ist. 9 ist eine bogenförmige Spreizhülse, die bei der Montage eine Überlappung des vom Ende 5 der inneren Halterung 1 zur Spreizhülse 9 verlaufenden Abschnittes der Spannkette 6 mit dem von der Spreizhülse 9 zur Gleithülse 7 verlaufenden Abschnitt der Spannkette 6 verhindert. Durch die Formsteifigkeit der äußeren Halterung 2 wird auch einer Überlappung anderer Kettenstrangabschnitte bei der Montage entgegengewirkt.

Bei einer bevorzugten Ausführungsform besteht die innere Halterung 1 aus einem Bügel aus Federstahldraht, während die äußere Halterung 2 von einer Seillitze gebildet wird.

Anstelle einer Seillitze für die äußere Halterung 2 läßt sich auch eine Gliederkette verwenden, deren Glieder 10 mit einer aufeinanderfolgende Glieder 10 miteinander verbindenden, die Gliederkette versteifenden, elastischen Ummantelung 11 versehen sind. Der Außendurchmesser der Ummantelung 11 ist ungleich stark. An den Übergängen vom größeren zum kleineren Außendurchmesser befinden sich Anschlagschultern 12 für Endglieder 13 von Kettenstrangabschnitten des Kettennetzes 3.

Will man sowohl die innere Halterung 1 als auch die äußere Halterung 2 aus Gliederketten herstellen, so wird man die Ummantelung für die innere Halterung 1 stärker ausbilden als die Ummantelung für die äußere Halterung 2.

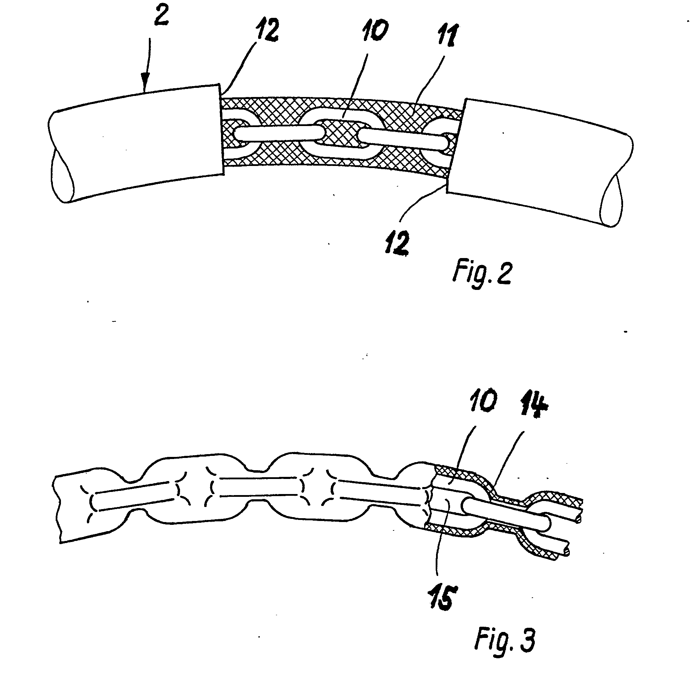

Während die Glieder 10 der in Fig. 2 dargestellten Gliederkette voll in die Ummantelung 11 einvulkanisiert sind, sind die Glieder 10 der in Fig. 3 dargestellten Gliederkette lediglich in eine von einem Schrumpffolienschlauch gebildete Ummantelung 14 eingebettet. Die lichten Kettengliedinnenräume 15 bleiben mit anderen Worten erhalten. Es versteht sich, daß die Formsteifigkeit einer Halterung der in Fig. 3 dargestellten Art geringer ist als die Formsteifigkeit einer Halterung gemäß Fig. 2 oder als die Formsteifigkeit eines Federstahlbügels.

Dadurch, daß die innere Halterung 1 über eine größere Formsteifigkeit verfügt als die äußere Halterung 2, wird der Benutzer der Gleitschutzkette beim In-die-Hand-Nehmen der Kette diese spontan an der inneren Halterung 1 erfassen. Die innere Halterung ist darüber hinaus in der Nähe ihrer Enden 4 und 5 mit Handgriffen 16 und 17 versehen. Beim Erfassen der Halterung 1 im Bereich dieser Handgriffe 16 und 17 ist das Überstülpen der inneren Halterung über einen Fahrzeugreifen besonders einfach durchführbar.

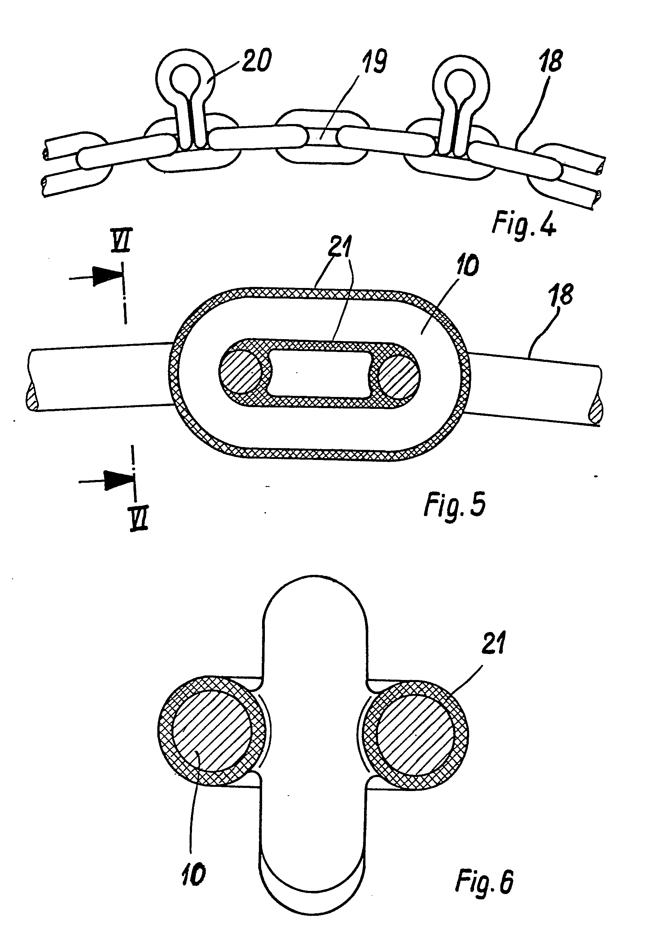

Ein bevorzugtes Ausführungsbeispiel einer ummantelten Gliederkette 18 zeigen die Fig. 4 - 6. Hier bleiben die lichten Innenräume 9 der Glieder 10 der Gliederkette 18 nicht nur erhalten, sondern auch von außen zugänglich, d.h. es besteht die Möglichkeit, in bestimmte lichte Innenräume 19 Seitenhaken 20 einzuhängen. Die Gliederkette 18 und die Seitenhaken 20 können, wie dies in den Fig. 5 und 6 angedeutet ist, durch eine aufgesinterte Pulverbeschichtung 21 ummantelt werden. Durch die Pulverbeschichtung 21 wird die Gelenkigkeit zwischen aufeinanderfolgenden Kettengliedern 10 der Gliederkette

- 5 -

mehr oder weniger stark reduziert. Der Grad
der Formsteifigkeit hängt dabei von der Dicke
der Ummantelung ab.

- 1 -

Patentansprüche :

1. Gleitschutzkette für Fahrzeugreifen mit je einer bei montierter Kette gegen die Innenseite und die Außenseite des Reifens zur Anlage kommenden Halterung für sich über die Lauffläche erstreckende Kettenstrangabschnitte, dadurch gekennzeichnet, daß die Formsteifigkeit der inneren Halterung (1) größer ist als die Formsteifigkeit der äußeren Halterung (2).

2. Gleitschutzkette nach Anspruch 1, dadurch gekennzeichnet, daß die innere Halterung (1) aus einem Bügel aus Federstahldraht besteht, während die äußere Halterung (2) von einer Seillitze gebildet wird.

3. Gleitschutzkette nach Anspruch 1, dadurch gekennzeichnet, daß die innere Halterung (1) aus einem Bügel aus Federstahldraht besteht, während die äußere Halterung (2) von einer Gliederkette gebildet wird, deren Glieder (10) mit einer aufeinanderfolgende Glieder (10) miteinander verbindenden, die Gliederketten versteifenden elastischen Ummantelung (11) versehen sind.

4. Gleitschutzkette nach Anspruch 1, dadurch gekennzeichnet, daß die innere Halterung (1) und die äußere Halterung (2) von jeweils einer Gliederkette gebildet werden, deren Glieder mit einer aufeinanderfolgende Glieder miteinander verbindenden, die Gliederkette versteifenden Ummantelung versehen sind, wobei der

- 2 -

Mantel für die die innere Halterung (1) bildende
Gliederkette stärker ausgebildet ist als der
Mantel für die äußere Halterung (2).

5. Gleitschutzkette nach Anspruch 3 oder 4,
dadurch gekennzeichnet,
daß die Gliederkette in einen Schrumpffolienschlauch (14) eingebettet ist.

6. Gleitschutzkette nach Anspruch 3 oder 4,
dadurch gekennzeichnet,
daß die Gliederkette (18) unter Erhaltung der
lichten Kettengliedinnenräume (19) mit einer aufgesinterten Pulverbeschichtung (21) versehen ist.

7. Gleitschutzkette nach Anspruch 3 oder 4,
dadurch gekennzeichnet,
daß die Gliederkette in eine elastische Ummantelung (11) einvulkanisiert ist.

8. Gleitschutzkette nach einem der Ansprüche 5 bis 7,
dadurch gekennzeichnet,
daß in einzelne Kettenglieder (10) der Gliederkette (18) eingehängte Seitenhaken (20) in die Ummantelung (21) einbezogen sind.

9. Gleitschutzkette nach einem der Ansprüche 1 bis 8,
dadurch gekennzeichnet,
daß die als Bügel ausgebildete innere Halterung
(1) in der Nähe der Enden (4,5) des Bügels mit
Handgriffen (16,17) versehen ist.

*Fig.1*

Fig. 2

Fig. 3

Fig. 4

Fig. 5

Fig. 6